# EUROPÄISCHE PATENTSCHRIFT

(11) **EP 1 430 959 B1**
(45) Veröffentlichungstag und Bekanntmachung des Hinweises auf die Patenterteilung: **07.05.2008**
(21) Anmeldenummer: 03025787.7
(22) Anmeldetag: 11.11.2003
(51) Int. Cl.: B05C 17/005, A61C 9/00, B65D 81/32

(54) **Vorrichtung zum Mischen und Ausbringen von Mehrkomponentenmassen**
Device for mixing and dispensing multicomponent products
Dispositif permettant de mélanger et de distribuer des produits à plusieurs composants

(30) Priorität: 21.11.2002 DE 10254409
(43) Veröffentlichungstag der Anmeldung: 23.06.2004
(73) Patentinhaber: Ernst Mühlbauer GmbH & Co.KG, 25870 Norderfriedrichskoog (DE)
(72) Erfinder: Hörth, Hans, 21147 Hamburg (DE); Reuss, Steffen, 20148 Hamburg (DE); Höhnk, Hans-Dieter, Dr., 21465 Reinbek (DE)
(74) Vertreter: Glawe, Delfs, Moll

(56) Entgegenhaltungen:
- EP-A- 0 319 135
- DE-A1- 3 420 324
- DE-U1- 29 518 531
- FR-A- 806 639
- US-B1- 6 477 743

## Beschreibung

Die Erfindung betrifft eine Vorrichtung zum Mischen und Ausbringen von Mehrkomponentenmassen, insbesondere für Dentalzwecke mit einer Kartusche mit mindestens zwei parallel angeordneten zylindrischen Kammern zum Aufnehmen der Komponenten und jeweils einem Kolben zum Auspressen der Komponenten, wobei die Kammern Auslaßöffnungen aufweisen, die durch eine Kappe bedeckt sind, die eine eine Mischwendel einschließende Auslaßröhre aufweist, wobei die Kappe von einer die Auslaßöffnungen verschließenden Stellung in eine dieselben freigebende Stellung bewegbar ist.

Eine bekannte Vorrichtung dieser Art, die allerdings nicht für Dentalzwecke bestimmt ist (EP 0 319 135 A2) weist zwei zylinderförmige Kammern auf, in denen jeweils eine Komponente enthalten ist. Die Kammern sind an ihrer Stirnseite mit Öffnungen versehen, die durch eine Kappe verschlossen sind. Die Kappe weist eine hülsenförmige Auslaßröhre auf, die eine Mischwendel umschließt. Die Kappe verschließt zunächst die Öffnungen der Kammern. Soll die Zweikomponentenmasse ausgegeben werden, so zieht man an der Kappe, so daß sich diese ein wenig von der Kartusche mit den beiden Kammern wegbewegt und die Auslaßöffnungen freigibt. Mit Hilfe von Kolben in den Kammern, auf die Druck ausgeübt wird, können dann die Komponenten in die Kappe und von dort in die hülsenförmige Auslaßröhre gedrückt werden. Während des Durchgangs durch diese Auslaßröhre werden die Komponenten durch die Mischwendel gemischt.

Solche Vorrichtungen sind auch für Dentalzwecke sehr zweckmäßig. Es ist nicht erforderlich, eine separate Verschlußkappe vorzusehen, die entfernt werden muß und durch eine Kappe ersetzt werden muß, die die Auslaßröhre und die Mischwendel enthält. Ein Nachteil solcher Vorrichtungen besteht aber darin, daß ein separater Handgriff erforderlich ist, an der Kappe zu ziehen, um diese in die offene Stellung zu bringen. Dies ist nicht nur umständlich; es besteht auch die Gefahr, daß man die Kappe irrtümlich ganz abzieht. Auch bei der Herstellung solcher vorbekannter Vorrichtungen treten Probleme auf. Das gleiche Modell der Kartuschen soll möglicherweise mit unterschiedlichen Kappen geliefert werden. Je nach Anwendungszweck sind gerade oder gekrümmte Auslaßröhren erforderlich. Diese Kappen müssen dann jeweils auch mit einer Mischwendel versehen sein, sind also verhältnismäßig teure Teile. Außerdem ist die Anbringung der Mischwendel in der Kappe nicht ganz einfach.

Die Aufgabe der Erfindung besteht in der Schaffung einer Vorrichtung der eingangs genannten Art, die leicht und fehlerfrei zu bedienen ist und kostengünstige und praktische Massenherstellung erlaubt.

Die erfindungsgemäße Lösung besteht darin, daß an der Kartusche zwischen den Auslaßöffnungen eine sich zur Kappe erstrekkende Querwand vorgesehen ist, an der die Mischwendel angebracht ist.

Es ist vorzugsweise nicht mehr erforderlich, an der Kappe zu ziehen. Sie weist vielmehr eine der Kartusche gegenüberstehende innere Fläche auf, die groß genug ist, daß der Druck der Komponenten, wenn diese ausgepreßt werden, die Kappe in die geöffnete Stellung bewegt.

Die Mischwendel ist dabei erfindungsgemäss an der Kartusche und nicht an der Kappe angebracht. Sie ist zu diesem Zweck an einer Querwand angebracht, die den weiteren Vorteil hat, daß die zwei oder mehr Komponenten nicht ohne weiteres beim Ausbringungsvorgang in die Kammer der jeweils anderen Komponente gelangen können und hier z.B. Aushärtung und damit Funktionsunfähigkeit der Vorrichtung bewirken.

Zweckmäßigerweise ist die Kappe in Bezug auf die Kartusche drehbar, da dann bei einer gekrümmten Auslaßröhre die Bedienungsperson diese Auslaßröhre so einstellen kann, wie es für sie am zweckmäßigsten ist. Die Drehbarkeit ist aber erst gewährleistet, wenn die Kappe in die geöffnete Stellung bewegt ist. Zu diesem Zweck wird die Querwand bei geschlossener Kappe von der Kappe eingeschlossen bzw. beidseitig so ergriffen, daß eine Drehung nicht möglich ist. Dadurch ist es möglich, die inneren Oberflächenbereiche der Kappe, die die Auslaßöffnungen der Kammern verschließen sollen, für diesen Zweck optimal auszubilden.

Wenn die Mischwendel flexibel ist, können Kappen mit Auslaßröhren verwendet werden, die unterschiedliche Krümmungen aufweisen.

Zweckmäßigerweise weist die Vorrichtung Rasteinrichtungen für die geschlossene und die geöffnete Stellung auf. Dabei muß die Rasteinrichtung für die geschlossene Stellung selbstverständlich in ihrer Haltekraft an die Öffnungskraft durch den Druck der Komponenten angepaßt sein, damit die Kappe tatsächlich lediglich durch Druckausübung geöffnet werden kann und man nicht daran ziehen muß.

Zweckmäßigerweise weist die Rasteinrichtung für die offene Stellung eine größere Haltekraft auf als die Rasteinrichtung für die geschlossene Stellung, da sonst die Gefahr besteht, daß die Kappe vollständig von der Kartusche gelöst wird, wenn die Bedienungsperson die Kraft, die zum Öffnen erforderlich war, nicht anschließend verringert. Zu diesem Zweck kann vorgesehen sein, daß die Rasteinrichtung für die offene Stellung eine Schnapp-Rast-Einrichtung ist, die einer weiteren Öffnungsbewegung der Kappe eine größere Widerstandskraft entgegensetzt als bei einer Schließbewegung. Zu diesem Zweck können z.B. im Querschnitt sägezahnförmige Flächen vorgesehen sein, die ein Aufschieben der Kappe auf die Kartusche aufgrund der Schrägflächen erleichtern, wobei dann aber einer Bewegung in entgegengesetzter Richtung, also zum Abziehen der Kappe, die zur Achse senkrechten Flächen ein Lösen der Kappe verhindern.

Obwohl die Vorrichtung für mehr als zwei Komponenten ausgebildet sein kann, ist sie besonders zweckmäßig für zwei Komponenten und entsprechend mit zwei Kammern ausgebildet. Die erfindungsgemäße Vorrichtung eignet sich besonders für einmaligen Gebrauch. Sie kann auch verhältnismäßig klein ausgebildet sein und mit einer Auspreßvorrichtung oder mit Hilfe eines Adapters durch eine größere Zange betätigt werden. Die Auspreßvorrichtung bzw. der Adapter kann dabei mit Flächen ausgebildet sein, die die Kappe festhalten, so daß diese sich nach dem Öffnen nicht weiterbewegen, von der Kartusche lösen und in den Mundraum des Patienten gelangen kann.

Vorteilhafterweise ist am Auslaßende der Auslaßröhre 12 eine Einrichtung 19 zum Verteilen oder gleichmäßigen Auf/Einbringen der Mehrkomponentenmasse vorgesehen. Diese Einrichtung 19 kann ein Pinsel, ein kleiner Schwamm, eine Bürste, eine Düse, ein Spatel und dergleichen sein. Die Einrichtung 19 kann als zusätzliches Aufsatzteil ausgebildet sein, das auf die Auslaßröhre 12 aufgesetzt wird. Die Einrichtung 19 kann aber auch einstückig mit der Auslaßröhre 12 ausgebildet sein.

Die Erfindung wird im folgenden anhand einer vorteilhaften Ausführungsform unter Bezugnahme auf die beigefügten Zeichnungen beispielsweise beschrieben. Es zeigen in perspektivischer, teilweise aufgeschnittener Ansicht:
- Fig. 1: die Vorrichtung im geschlossenen Zustand;
- Fig. 2: die Vorrichtung, teilweise aufgeschnitten, im geöffneten Zustand;
- Fig. 3: Detailansichten im Schnitt der Ausführungsform der Fig. 1 und 2;
- Fig. 4: Detailansichten einer etwas anderen Ausführungsform;
- Fig. 5: die Verwendung der erfindungsgemäßen Vorrichtung in einer Auspreßzange mit einem Adapter;
- Fig. 6: Einzelheiten im Schnitt des Adapters der Fig. 5 mit eingesetzter erfindungsgemäßer Vorrichtung;
- Fig. 7: Im Schnitt eine Auslaßröhre mit einer Einrichtung zum Verteilen der fertigen Mehrkomponentenmasse;
- Fig. 8: In perspektivischer Ansicht eine andere Ausführungsform mit einer Einrichtung zum Verteilen der fertigen Mehrkomponentenmasse; und
- Fig. 9-20: weitere Ansichten und Ausführungsformen.

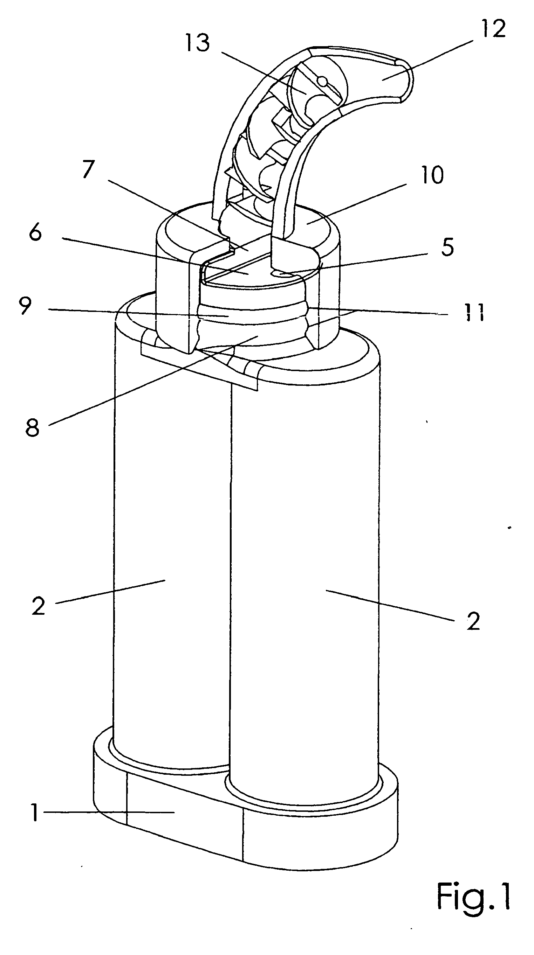

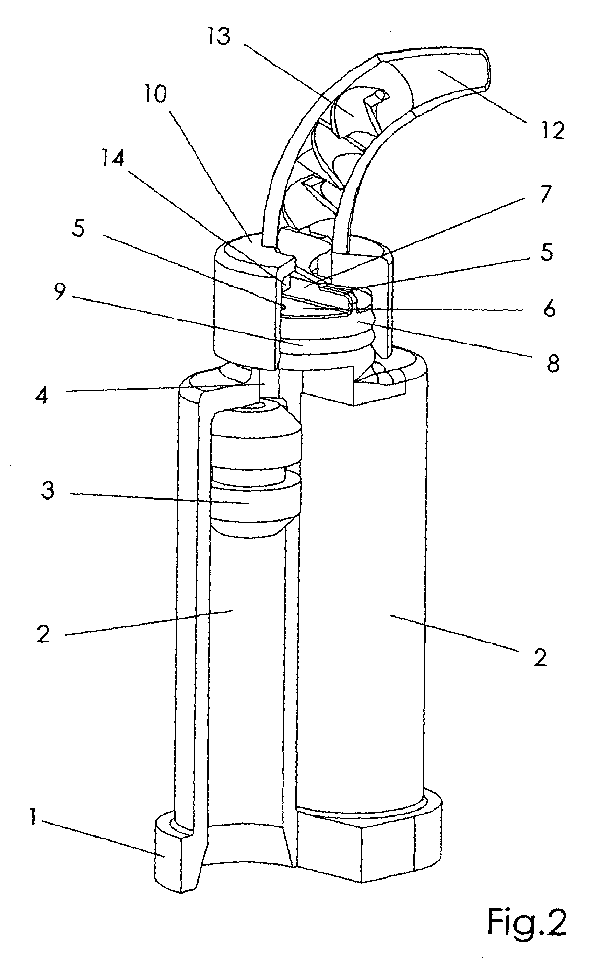

Die Vorrichtung der Erfindung, die in den Fig. 1 und 2 gezeigt ist, weist eine Kartusche 1 auf, die zwei zylinderförmige Kammern 2 enthält, in denen jeweils eine Komponente (nicht gezeigt) und ein Kolben 3 angeordnet sind (Fig. 2), durch den in den Fig. von unten her durch ein geeignetes Werkzeug Druck nach oben ausgeübt werden kann, um die Komponenten durch Kanäle 4 und Öffnungen 5 nach oben zu drükken. Diese Öffnungen sind auf einer kreisförmigen Fläche 6 vorgesehen, die durch eine Querwand 7 unterteilt ist. Die Fläche 6 befindet sich dabei auf einem kreiszylindrischen Vorsprung der Kartusche, die einen ringförmigen Wulst 9 aufweist. Auf diesem zylinderförmigen Vorsprung 8 ist eine Kappe 10 aufgesetzt, die an ihrer Innenwand ringförmige Ausnehmungen 11 aufweist, die mit dem ringförmigen Wulst 9 zusammenwirken können. Die Kappe 10 weist eine gekrümmte Auslaßröhre 12 auf, die eine Mischwendel 13 umschließt, die an der Querwand 7 befestigt ist. Im geschlossenen Zustand, der in Fig. 1 gezeigt ist, greift der ringförmige Wulst 9 in die obere ringförmige Ausnehmung 11 der Kappe 10 ein. Die im wesentlichen kreisförmige Innenfläche der Kappe 10 deckt dabei die Öffnungen 5 zu, so daß die Kammern 2 verschlossen sind. Die Querwand 7 wird in einer Ausnehmung 20 gegen Verdrehung festgehalten, die in Fig. 2 ersichtlich ist. Wird Druck auf die Kolben 3 und damit die Komponenten ausgeübt, so wird durch diesen Druck die Kappe 10 von der in Fig. 1 gezeigten Stellung in die in Fig. 2 gezeigte Stellung bewegt. Die zylindrische Innenfläche der Kappe 10 entfernt sich dabei von den Auslaßöffnungen 5, so daß die Komponenten austreten können. Die Komponenten sind dabei durch die Querwand 7 voneinander getrennt, so daß die jeweils eine Komponente nicht ohne weiteres in die Kammer 2 der jeweils anderen Komponente gelangen kann. Die Querwand 7 wird nun nicht mehr durch die Ausnehmung 20 gehalten, so daß die Kappe 10 gedreht werden kann und die Bedienungsperson die Auslaßröhre 12 in die Richtung drehen kann, die für sie besonders zweckmäßig ist.

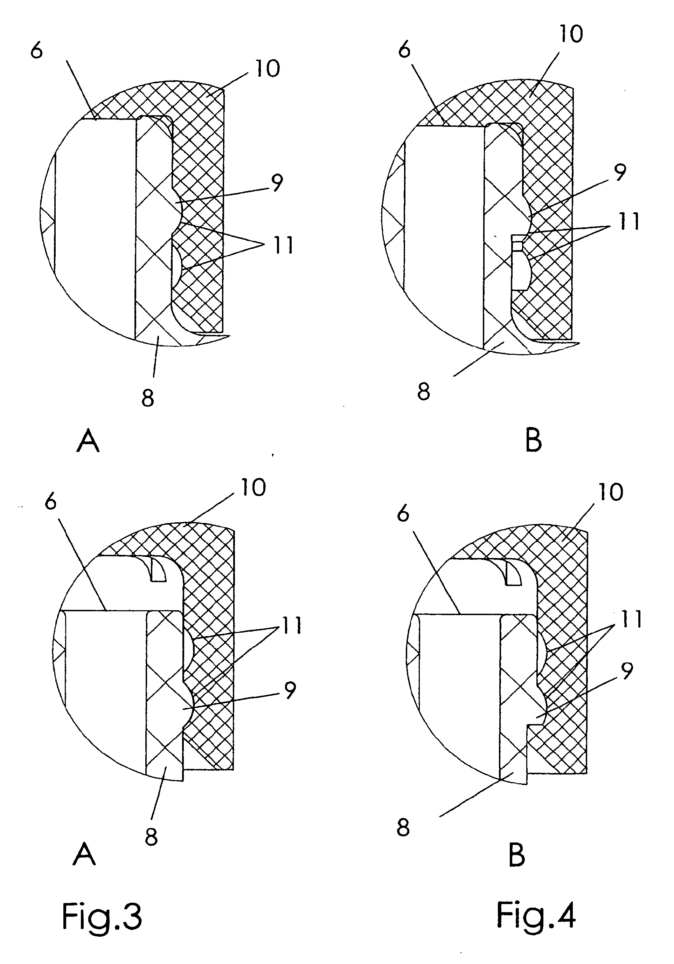

Fig. 3 zeigt Detaildarstellungen, wie die Kappe 10 mit Hilfe des ringförmigen Wulst 9 und der Ausnehmungen 11 festgehalten wird. Oben bei A ist gezeigt, daß sich der ringförmige Wulst in der oberen Ausnehmung 11 befindet, die Kappe 10 also ihre untere Stellung einnimmt und die Öffnungen 5 verschließt. Bei der Darstellung B hat sich die Kappe nach oben bewegt und wird an ihrer unteren Ausnehmung 11 vom Wulst 9 in dieser geöffneten Stellung gehalten.

Die Ausführungsform der Fig. 4 unterscheidet sich von derjenigen der Fig. 3 dadurch, daß der Wulst 9 des zylinderförmigen Vorsprungs 8 der Kartusche eine untere gerade Fläche hat, wobei die untere Ausnehmung 11 der Kappe 10 ebenfalls eine entsprechende gerade Fläche hat. Durch das Zusammenwirken dieser geraden Flächen wird verhindert, daß sich die Kappe 10 von der bei B in Fig. 4 gezeigten geöffneten Stellung weiter nach oben bewegen kann. Dadurch wird ein Abspringen der Kappe 10 z.B. in den Mundraum des Patienten verhindert.

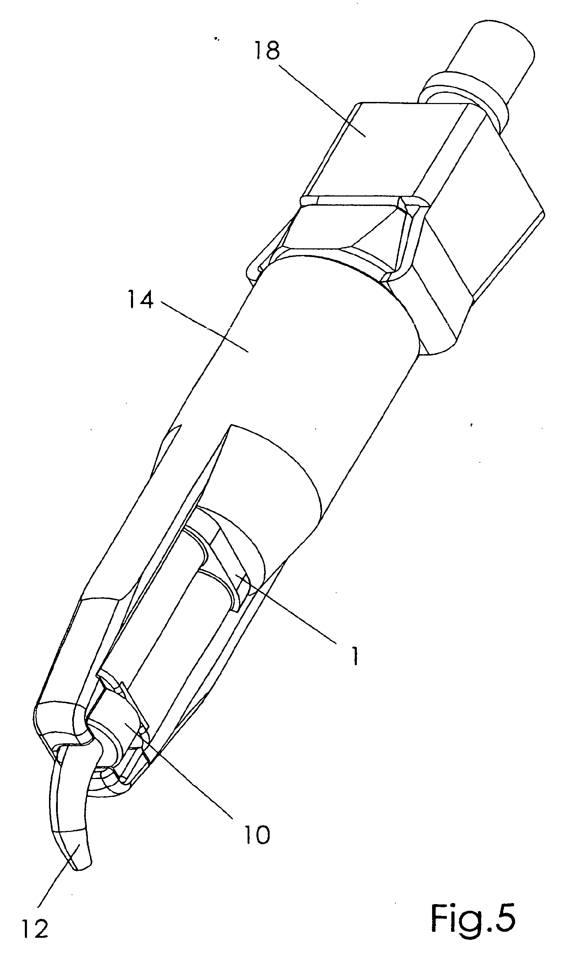

In Fig. 5 ist ein Adapter 14 gezeigt, der eine obere Öffnung aufweist, in den die Kartusche 1 mit der Kappe 10 und der Auslaßröhre 12 eingesetzt werden kann. Dieser Adapter 14 kann wiederum auf eine Zange 18 aufgesetzt werden, die für andere, insbesondere größere Kartuschen bestimmt und handelsüblich erhältlich ist.

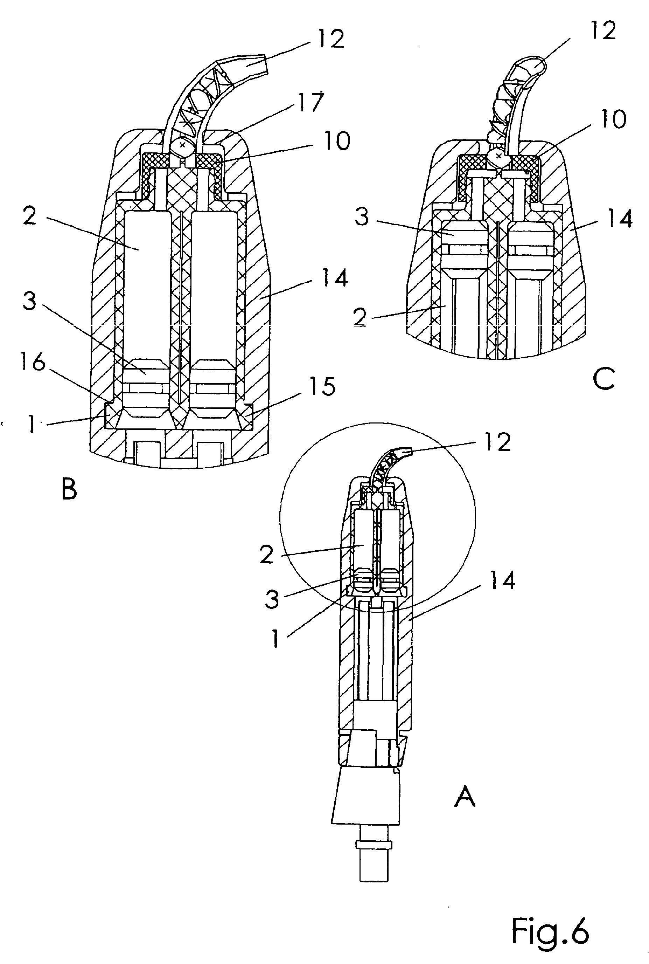

Fig. 6 zeigt im Schnitt den Adapter 14 mit eingesetzter Kartusche 1. Bei A ist eine Gesamtansicht gezeigt, bei B und C sind Detailansichten dargestellt. Bei der Stellung von B in Fig. 6 wird die Kartusche 1 an ihrem Basisteil 15 durch eine Anschlagfläche 16 an einer Bewegung nach oben gehindert, wenn auf die Kolben 3 Druck ausgeübt wird. Eine weitere Anschlagfläche 17 hindert die Kappe 10 an einer weiter nach oben gerichteten Bewegung, wenn sie von der geschlossenen Stellung (bei B in Fig. 6) in die geöffnete Stellung (bei C in Fig. 6) bewegt ist. Durch diese Anschlagfläche 17 wird also sicher verhindert, daß die Kappe 10 abspringen kann. Der Adapter hat dabei den Vorteil, daß die erfindungsgemäße Vorrichtung auch mit anderen handelsüblichen Zangen verwendet werden kann. Selbstverständlich soll dadurch nicht ausgeschlossen werden, daß auch spezielle Zangen für die erfindungsgemäßen Vorrichtungen geschaffen werden können, die dann ebenfalls unter den Schutzbereich dieses Patents fallen.

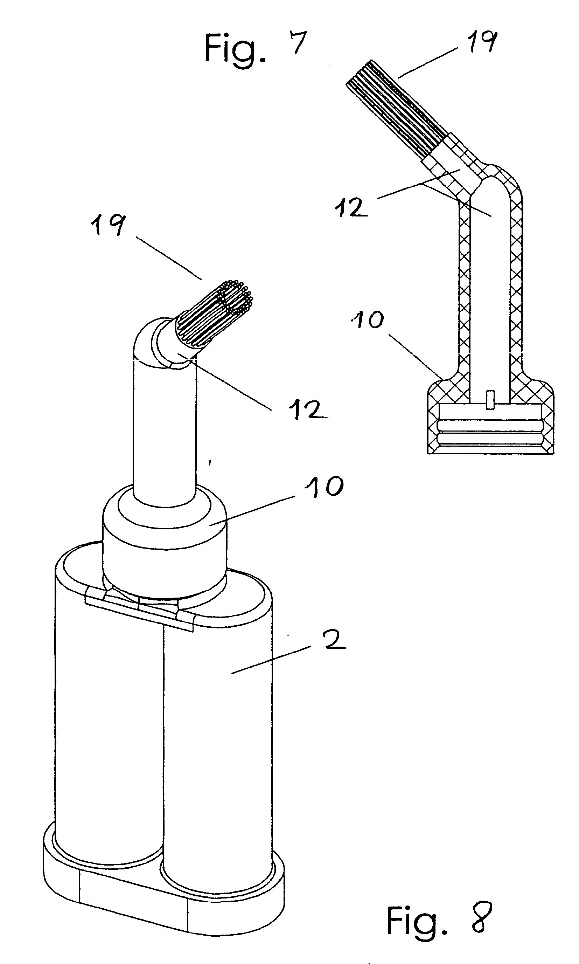

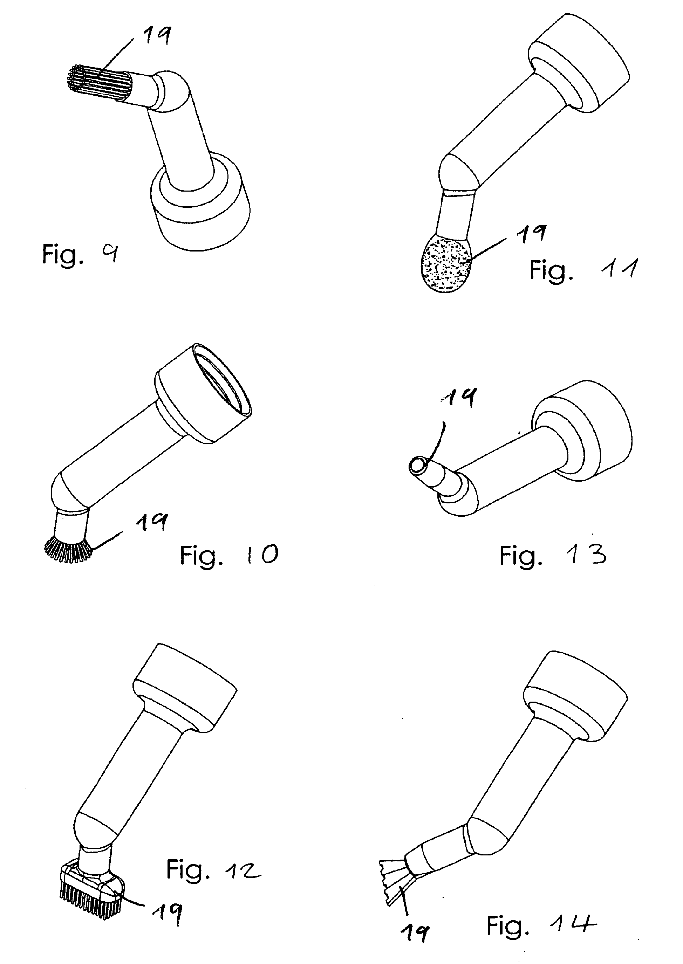

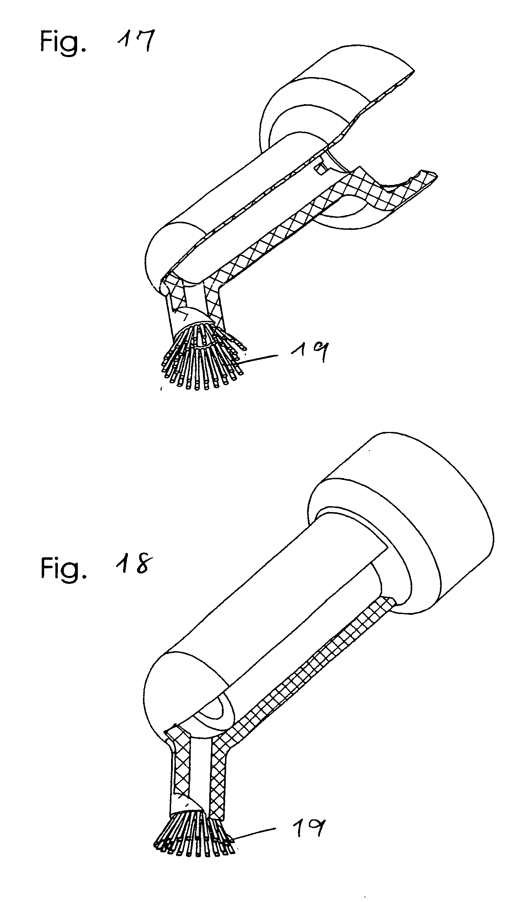

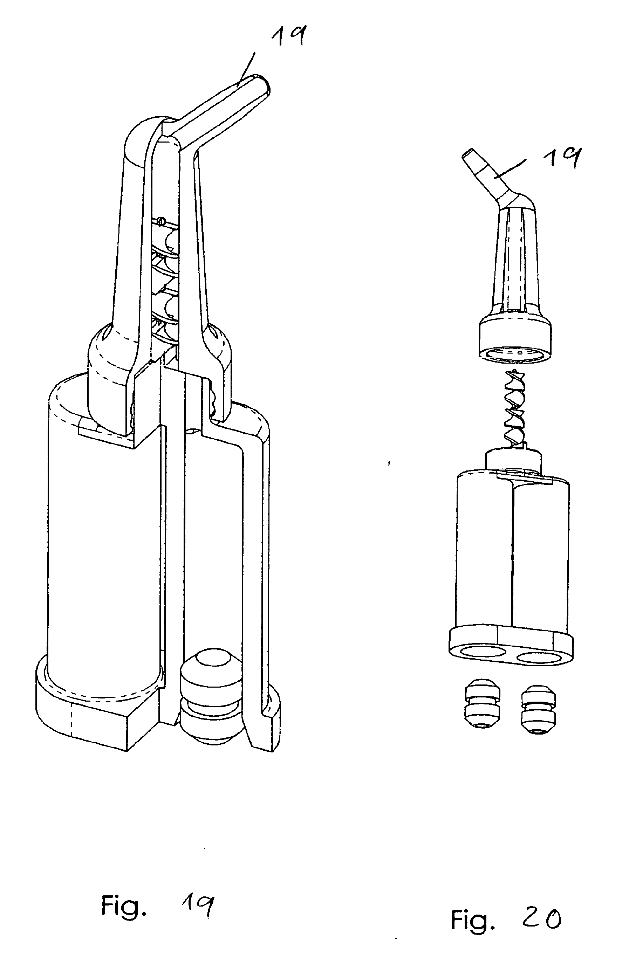

In Figur 7 ist ein Querschnitt durch eine andere Ausführungsform der Auslaßröhre 12 gezeigt, bei der am Auslaßende derselben eine Einrichtung 19 zum Verteilen oder Verstreichen der ausgepreßten Mehrkomponentenmasse angeordnet ist. Die Einrichtung 19 zum Verteilen oder Verstreichen kann ein Pinsel (Fig. 7, 8, 9, 10, 17, 18), ein Schwämmchen (Fig. 11), eine Bürste (Fig. 12), eine Düse (Fig. 13, 19, 20), ein Spatel (Fig. 14) oder dergleichen sein.

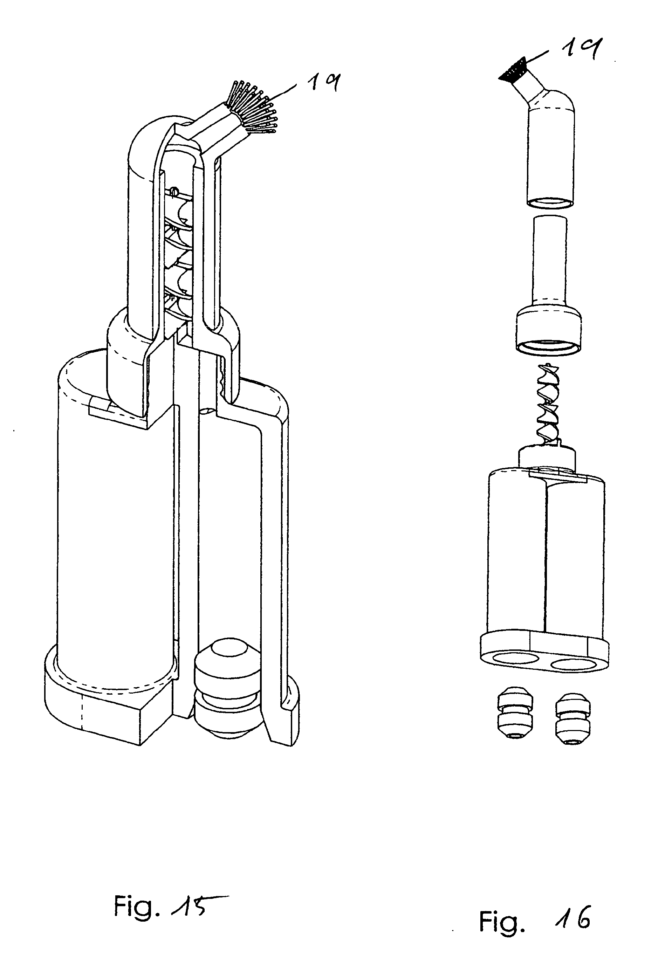

Im Gegensatz zur Ausführungsform der Figur 7 ist bei der Ausführungsform der Figur 8 die Einrichtung 19 zum Verteilen der fertigen Mehrkomponentenmasse auf die Auslaßröhre 12 aufgesetzt, so daß hier verschiedene Teile 19 wahlweise an der Auslaßröhre 12 angebracht werden können. Dies ist auch bei der Ausführungsform der Fig. 15 und 16 der Fall.

## Patentansprüche

1. Vorrichtung zum Mischen und Ausbringen von Mehrkomponentenmassen, insbesondere für Dentalzwecke mit einer Kartusche (1) mit mindestens zwei parallel angeordneten zylindrischen Kammern (2) zum Aufnehmen der Komponenten und jeweils einem Kolben (3) zum Auspressen der Komponenten, wobei die Kammern (2) Auslaßöffnungen (5) aufweisen, die durch eine Kappe (10) bedeckt sind, die eine eine Mischwendel (13) einschließende Auslaßröhre (12) aufweist, wobei die Kappe (10) von einer die Auslaßöffnungen (5) verschließenden Stellung in eine dieselben freigebende Stellung bewegbar ist, **dadurch gekennzeichnet, daß** an der Kartusche (1) zwischen den Auslaßöffnungen (5) eine sich zur Kappe (10) erstreckende Querwand (7) vorgesehen ist, an der die Mischwendel (13) angebracht ist.

2. Vorrichtung nach Anspruch 1, **dadurch gekennzeichnet, daß** die Kappe (10) durch den Druck der Komponenten beim Auspressen derselben in die geöffnete Stellung bewegbar ist.

3. Vorrichtung nach Anspruch 1 oder 2, **dadurch gekennzeichnet, daß** die Kappe (10) in Bezug auf die Kartusche (1) drehbar ist und im geschlossenen Zustand die Querwand (7) so einschließt, daß diese Drehbewegung verhindert wird.

4. Vorrichtung nach einem der Ansprüche 1 bis 3, **dadurch gekennzeichnet, daß** die Mischwendel (13) flexibel ist.

5. Vorrichtung nach einem der Ansprüche 1 bis 4, **dadurch gekennzeichnet, daß** sie Rasteinrichtungen (9, 11) für die geschlossene und die geöffnete Stellung aufweist.

6. Vorrichtung nach Anspruch 5, **dadurch gekennzeichnet, daß** die Rasteinrichtung (9, 11) für die offene Stellung eine größere Haltekraft hat als die Rasteinrichtung (9, 11) für die geschlossene Stellung.

7. Vorrichtung nach Anspruch 5 oder 6, **dadurch gekennzeichnet, daß** die Rasteinrichtung (9, 11) für die offene Stellung eine Schnapp-Rast-Einrichtung ist, die einer weiteren Öffnungsbewegung der Kappe (10) eine größere Widerstandskraft entgegensetzt als einer Schließbewegung.

8. Vorrichtung nach einem der Ansprüche 1 bis 7, **dadurch gekennzeichnet, daß** sie zwei Kammern (2) aufweist.

9. Auspreßvorrichtung mit einer Vorrichtung nach einem der Ansprüche 1 bis 8, **dadurch gekennzeichnet, daß** sie Anschlagflächen (16, 17) aufweist, die eine Bewegung in Auspreßrichtung begrenzen, und zwar eine erste Anschlagfläche (16) für die Kartusche (1) und eine zweite Anschlagfläche (17) für die Kappe (10) im geöffneten Zustand.

10. Auspreßvorrichtung nach Anspruch 9, **dadurch gekennzeichnet, daß** sie einen Adapter (14) für die Verwendung mit Zangen (18) für andere Kartuschen aufweist.

11. Auspreßvorrichtung nach einem der Ansprüche 1 bis 10, **dadurch gekennzeichnet, daß** sie eine Einrichtung (19) zum Verteilen der ausgepreßten Mehrkomponentenmasse aufweist.

12. Auspreßvorrichtung nach Anspruch 11, **dadurch gekennzeichnet, daß** die Einrichtung (19) zum Verteilen der ausgepreßten Mehrkomponentenmasse einstückig mit der Auslaßröhre (12) ausgebildet ist.

13. Auspreßvorrichtung nach Anspruch 11, **dadurch gekennzeichnet, daß** die Einrichtung (19) zum Verteilen der fertigen Mehrkomponentenmasse lösbar auf die Auslaßröhre (12) aufgesetzt ist.

14. Auspreßvorrichtung nach einem der Ansprüche 11 bis 13 **dadurch gekennzeichnet, daß** die Einrichtung (19) zur Verteilung der fertigen Mehrkomponentenmasse ein Pinsel, ein Schwämmchen, eine Bürste, eine Düse oder ein Spatel ist.

## Claims

1. Device for mixing and dispensing multi-component substances, in particular for dental purposes, comprising a cartridge (1) with at least two cylindrical chambers (2) arranged in parallel for receiving the components and with, respectively, a piston (3) for pressing out the components, the chambers (2) having outlet apertures (5) which are covered by a cap (10), which has an outlet tube (12) enclosing a mixing spiral (13), wherein the cap (10) is movable from a position which closes the outlet apertures (5) into a position which releases said apertures, **characterized in that** there is provided on the cartridge (1), between the outlet apertures (5), a transverse wall (7) which extends to the cap (10) and on which the mixing spiral (13) is mounted.

2. Device according to Claim 1, **characterized in that** the cap (10) is movable into the open position by the pressure of the components when said components are being expressed.

3. Device according to either of Claims 1 or 2, **characterized in that** the cap (10) is rotatable in relation to the cartridge (1) and in the closed state encloses the transverse wall (7) in such a way that this rotational movement is prevented.

4. Device according to any one of Claims 1 to 3, **characterized in that** the mixing spiral (13) is flexible.

5. Device according to any one of Claims 1 to 4, **characterized in that** it has latching means (9, 11) for the closed and the open position.

6. Device according to Claim 5, **characterized in that** the latching means (9, 11) for the open position has a greater holding force than the latching means (9, 11) for the closed position.

7. Device according to either of Claims 5 or 6, **characterized in that** the latching means (9, 11) for the open position is a snap-action latching means, which provides a greater resistance force in opposition to a further opening movement of the cap (10) than in opposition to a closing movement.

8. Device according to any one of Claims 1 to 7, **characterized in that** it has two chambers (2).

9. Expressing device comprising a device according to any one of Claims 1 to 8, **characterized in that** it has stop faces (16, 17) which restrict movement in the direction of pressing out, said stop faces being a first stop face (16) for the cartridge (1) and a second stop face (17) for the cap (10) in the open state.

10. Expressing device according to Claim 9, **characterized in that** it has an adapter (14) for use with grippers (18) for other cartridges.

11. Expressing device according to any one of Claims 1 to 10, **characterized in that** it has a means (19) for distributing the pressed out multi-component substance.

12. Pressing out device according to Claim 11, **characterized in that** the means (19) for distributing the pressed out multi-component substance is realized in one piece with the outlet tube (12).

13. Pressing out device according to Claim 11, **characterized in that** the means (19) for distributing the ready multi-component substance is detachably fitted onto the outlet tube (12).

14. Pressing out device according to any one of Claims 11 to 13, **characterized in that** the means (19) for distributing the ready multi-component substance is a pencil, a small sponge, a brush, a nozzle or a spatula.

## Revendications

1. Dispositif pour mélanger et distribuer des substances à plusieurs composants, en particulier pour usage dentaire, comportant une cartouche (1) avec au moins deux chambres (2) cylindriques parallèles entre elles, destinées à recevoir les composants et respectivement un piston (3) pour extraire par pression les composants, les chambres (2) comportant des orifices de sortie (5), qui sont recouverts par un capuchon (10) qui comporte un tube de distribution (12) contenant une spirale mélangeuse (13), le capuchon (10) pouvant être déplacé d'une position obturant les orifices de sortie (5) dans une position libérant ceux-ci, **caractérisé en ce que** sur la cartouche (1) entre les orifices de sortie (5) est prévue une paroi transversale (7), qui s'étend vers le capuchon (10) et sur laquelle est attachée la spirale mélangeuse (13).

2. Dispositif selon la revendication 1, **caractérisé en ce que** le capuchon (10) peut être déplacé dans la position d'ouverture sous l'effet de la pression des composants lors de l'extraction de ceux-ci.

3. Dispositif selon la revendication 1 ou 2, **caractérisé en ce que** le capuchon (10) est apte à tourner par rapport à la cartouche (1) et, dans la position fermée, enserre la paroi transversale (7) de telle sorte que ce mouvement de rotation est empêché.

4. Dispositif selon l'une quelconque des revendications 1 à 3, **caractérisé en ce que** la spirale mélangeuse (13) est flexible.

5. Dispositif selon l'une quelconque des revendications 1 à 4, **caractérisé en ce qu'**il comporte des dispositifs de blocage (9, 11) pour la position fermée et la position ouverte.

6. Dispositif selon la revendication 5, **caractérisé en ce que** le dispositif de blocage (9, 11) de la position ouverte possède une force de retenue supérieure à celle du dispositif de blocage (9, 11) de la position fermée.

7. Dispositif selon la revendication 5 ou 6, **caractérisé en ce que** le dispositif de blocage (9, 11) de la position ouverte est un dispositif de blocage par encliquetage, qui oppose au mouvement d'ouverture supplémentaire du capuchon (10) une force de résistance supérieure à celle d'un mouvement de fermeture.

8. Dispositif selon l'une quelconque des revendications 1 à 7, **caractérisé en ce qu'**il comporte deux chambres (2).

9. Dispositif d'extraction avec un dispositif selon l'une quelconque des revendications 1 à 8, **caractérisé en ce qu'**il comporte des surfaces de butée (16, 17), qui limitent un mouvement dans la direction d'extraction, à savoir une première surface de butée (16) pour la cartouche (1) et une deuxième surface de butée (17) pour le capuchon dans la position ouverte.

10. Dispositif d'extraction selon la revendication 9, **caractérisé en ce qu'**il comporte un adaptateur (14) pour l'utilisation avec des pinces (18) pour d'autres cartouches.

11. Dispositif d'extraction selon l'une quelconque des revendications 1 à 10, **caractérisé en ce qu'**il comporte un dispositif (19) pour répartir la substance à plusieurs composants extraite.

12. Dispositif d'extraction selon la revendication 11, **caractérisé en ce que** le dispositif (19) pour répartir la substance à plusieurs composants extraite est réalisé d'un seul tenant avec le tube de distribution (12).

13. Dispositif d'extraction selon la revendication 11, **caractérisé en ce que** le dispositif (19) pour répartir la substance à plusieurs composants extraite est posé de manière amovible sur le tube de distribution (12).

14. Dispositif d'extraction selon l'une quelconque des revendications 11 à 13, **caractérisé en ce que** le dispositif (19) pour répartir la substance à plusieurs composants finie est un pinceau, une petite éponge, une brosse, une buse ou une spatule.
